# EUROPEAN PATENT SPECIFICATION

(11) **EP 3 866 590 B1**
(45) Date of publication and mention of the grant of the patent: **16.11.2022**
(21) Application number: 19801637.0
(22) Date of filing: 14.10.2019
(51) Int. Cl.: A01K 79/00, B63B 27/10, B66C 13/14, B66C 23/52

(54) **SHIP CRANE WITH A FISH PUMP**
SCHIFFSKRAN MIT EINER FISCHPUMPE
GRUE DE NAVIRE ÉQUIPÉE D'UNE POMPE À POISSONS

(30) Priority: 15.10.2018 NO 20181322
(43) Date of publication of application: 25.08.2021
(73) Proprietor: MacGregor Norway AS, 6530 Averøy (NO)
(72) Inventor: KIPPERNES, Anders, 6532 Averøy (NO)
(74) Representative: Acapo AS
(86) International application number: PCT/NO2019/050218
(87) International publication number: WO 2020/080950

(56) References cited:
- WO-A1-2014/025253
- JP-A- S6 015 365
- JP-U- S5 193 397

## Description

### State of the art and problems with the state of the art

A fishing vessel may be equipped with a pedestal crane with a pivot base with a crane beam comprising main beam and jib.

It is possible to use a pedestal crane as carrier for an electric fish pump for a fishing vessel. The fish pump is only needed in fish pump operations and is a heavy and bulky unit. The fish pump is only needed when fish is to be pumped up and only needs a limited rotation of the crane beam in the operative state of the fish pump. The fish pump and its cable winch drum are large components that are fairly in the way of other operations such as lifting goods and handling of other equipment, if the fish pump rotates together with the fish pump, but is not in use in its function. It could be a great advantage to park both the cable winch drum and the fish pump when they are not in use. An electric fish pump should from an operative standpoint, with advantage be able to be connected and disconnected both mechanically and electrically so that the pedestal crane can be used for other purposes when the fish pump shall not to be used. A fish pump that is carried by an electric winch cable will however have a connection mechanism for lifting and electrical power and signal supply. If the electric winch cable is to be used both for lifting/lowering and electric power supply it must have high shear strength and be equipped with a mechanical connection arrangement for the fish pump, and the winch cable must also have releasable electrical connections where leakage may occur so that the connections get in contact with sea water. Wear on seals, gaskets, and insulation as well as contacts in the connection by repeated connection and disconnection as well as wear during rolling and stamping as well as use submerged in sea water, will possibly cause mechanical wear, water penetration, corrosion, complete or partial failure of the power supply, overheating and fire danger in the power supply or shortening of the power and signal supply, something that could have consequences for the function of the fish pump. It would also be mechanical load on the releasable mechanical connection mechanism one may otherwise have, and tools would be required in order to connect and disconnect of such a coarse cable on a fish pump.

From the state of the art one should refer to:
JP S 6015365 A discloses a hose operating system with an electric pump for mounting on a ship. The system consists of a roller body for feeding in and out a flexible hose which is drilled with reinforcing coil wire and a crane body that mounts said roller body at the tip. The roller body is composed of a drive roller having projections of such a pitch that corresponds to the spiral projection arranged on the outer circumference of the hose. While the crane device is composed of a telescopic boom, is a support for supporting said boom inclinable and a turntable for rotating said support in the horizontal plane.

CN 103190382 A relates to a system for of sucking fish for mounting on a ship. The system comprises mainly a fish pump, a fish pump crane, a net bag winch, a fish pump hydraulic station and a fish water divider. The system is installed on the main deck of a ship, where the fish pump is movable and is locked on an operation platform on the ship.

DE 19940396 A1 discloses apparatus and a method for launching, pulling and salvaging a wire controlled submarine device. Where such a device is submerged from a stern deck on an auxiliary ship by means of a crane, and it is towed by means of a winch, a feeder cable, which is connected to the one by the ship and the other with the unit to transmit to these navigation commands, characterized in that after the underground unit is launched, then the cable with the aid a roller attached to the end of the boom of the crane supported by the positioning roller over the water as far as possible from the stern of the ship by movement of this crane.

### Short summary of the invention and advantages of the invention

A solution to the above mentioned problems is to introduce an electric fish pump (9) that is fixedly and watertight connected to an electric winch cable (61) and thus permanently connected to a winch drum (62). The fish pump of the present invention is an electric fish pump (9) that is fixedly and watertight connected to an electric winch cable (61).

It is a great advantage to be able to park both the cable winch drum and the fish pump when they are not in use. The electric fish pump of the invention can be parked without disconnecting electrically from the cable winch drum so that the pedestal crane can be used for other purposes when the fish pump is not in use.

One of the advantages of the invention is that we avoid releasable electric connections where leakage may occur so that the connection comes in contact with sea water, we avoid the risk of wear on seals and gaskets and insulation in the connection by repeated connections and disconnections, one avoids wear during rolling and stamping which otherwise could lead to corrosion and fire hazard in the power supply or a short in power and signal supply. One avoids mechanical wear due to relative movements between mechanical components in the possibly releasable connection mechanism one might otherwise have.

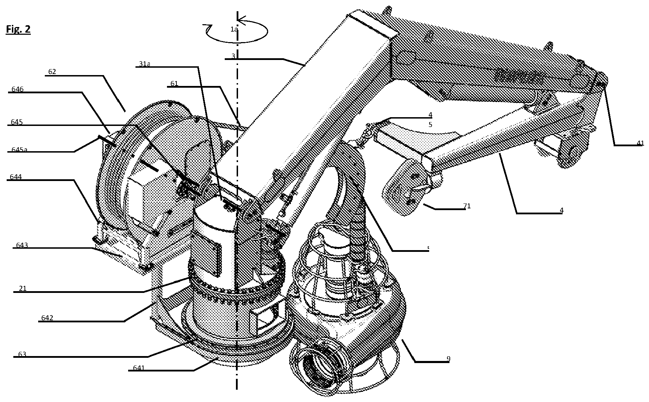

But, when one introduces a fixedly connected electric winch cable (62) fixedly connected to the fish pump (9) new technical problems arise: Such a high tensile strength electric cable (61) requires a high resistance to breaking and must at the same time be able to bend over a crane block but with a relatively high bending radius, here about 750 mm, and one must therefore have a corresponding smallest bending radius of the cable block (5) and introduce a bending limiter (52), which also takes up a lot of space in the radial and height extension of the crane, and will also get a diameter of the cable winch drum (62) of about 1500 mm. Please note that the winch cable in this case is arranged in a single layer on the cable winch drum (62), see Fig. 2. When parking a fish pump (9) fixedly connected to the electric winch cable (62) one must therefore consider the bending stiffness of the winch cable (61) cannot park the fish pump (9) without considering the stiffness of the winch cable.

One solution to the above mentioned problems is a pedestal crane (0) with an electric fish pump (9) comprising the following features:
- a pedestal (1) on a ship with a main bearing race (21) with a vertical axis of rotation (1a) for
- a pivot base (2) with a crane beam (3, 4) with a cable block (5) for an electric winch cable (61) that is fixedly watertight connected to the fish pump (9);
- a cable winch drum (62) with the electric winch cable (61),
- that the cable winch drum (62) is mounted on a drum bracket (64) on a bracket bearing race (63) on the pedestal (1) and concentric with the main bearing race (21) and is arranged to, together with the cable block (5) and the fish pump (9) in an operative state, to be pivot about the vertical axis of rotation (1a) connected to the rotation of the pivot base (2), and
- where the drum bracket (64) in the non-operative state of the cable winch drum (62) is arranged to be disconnected from the rotation of the pivot base (2) so that the fish pump (9) and the cable winch drum (62) is parked non-rotatable,
- while the pivot base (2) of the pedestal crane (0) is arranged to remain able to pivot on the main bearing race (21).

The fact that both the fish pump (9) and cable winch drum (62) is parked simultaneously and that one let them still be fixedly connected by the winch cable (61) results in that one in addition to releasing the pedestal crane also avoids almost any further bending and wear of the winch cable while the pedestal crane works uninterrupted with other tasks.

An additional advantage of the invention is that it causes less mass to be rotated during ordinary use of the crane, reduced energy consumption by the pivot base motor (22) that rotates the pivot base. There is also less bending and thus less wear on the electric winch cable (61) and thus reduced danger of exhaustion of the winch cable (61). There is also a reduced danger of crushing for the deck personnel when the low placed winch drum is parked.

### Short description of the figures

The invention is illustrated in the enclosed figures.

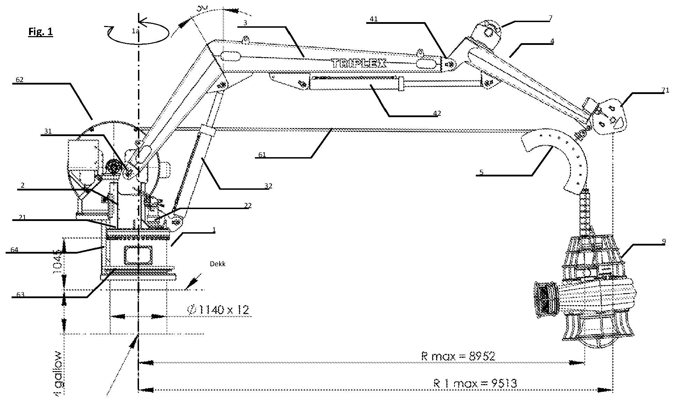

**Fig. 1** is a sketch of a ship crane (0) with a parkable fish pump (9) and cable winch drum (62) in accordance with the invention. The crane is here shown with the fish pump in operative state on the extended crane beam (3,4), and with the fish pump (9) ready to be lowered into sea water, fishing net, wire or cargo for pumping up fish. A transport hose of large diameter is to be connected to the outlet of the pump.
**Fig. 2** shows a perspective view of the ship crane (0) according to the invention with the fish pump (9) and the cable winch drum (62) in a parked position before disconnecting of cable block from the side arm of the jib (45), or before removal of the winch cable (61) from the cable block (5), so that at least the fish pump (9) and winch drum (62) can be parked so that the crane otherwise is freely rotatable without these.

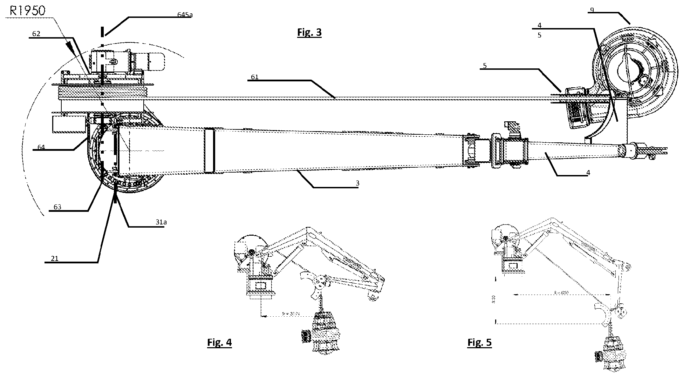

**Fig. 3** shows a top view of the ship crane (0) with the fish pump (9) and the cable winch drum (62), with the crane beam in operative extended position for the fish pump (9). In the shown embodiment the cable block (5) is mounted in a side beam (45) on the crane beam (3,4) and facing the same side as the cable winch drum (62) in its connected state so that the winch cable (61) runs straight in and out in relation to the plane of the cable winch drum (61). The connecting piece of the electric fish pump for connecting to a transport hose of large diameter is shown facing backwards towards the pedestal.
**Fig. 4** is a sketch of the crane with the jib (4) folded in and with the fish pump (9) hanging as high as the cable protector at the end of the winch cable will allow. This can illustrate the fish pump on its way between the parked and operative position.
**Fig. 5** is a sketch of the crane with the jib (9) facing downwards and with the fish pump (9) ready to be lowered further down into the water in order to pump up fish.

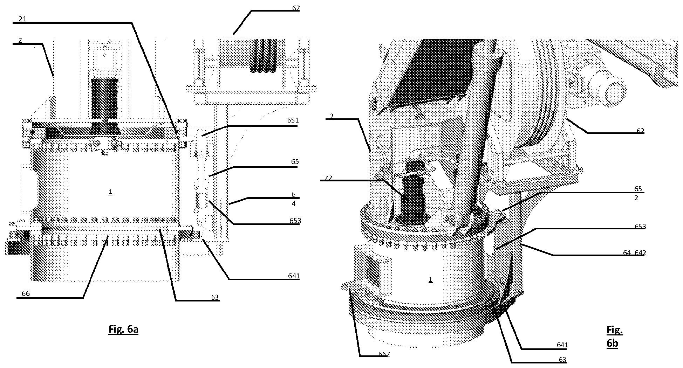

**Fig. 6a** shows a verticalaxial parallel cross-section and sketch of the pedestal (1) between a level at the deck and to an upper part of the drum bracket (64). A locking device (65) is shown, for engagement in a receiver casing mounted on the crane bolts of the pivot base (2), where the locking device (65) connects when the bracket (64) is to be rotated along with the rotational movement of the pivot base (2), and disconnects when the bracket (64) and the fish pump (9) is parked.
**Fig. 6b** shows an isometric sketch of the pedestal (1) and the pivot base (2), with the locking device in engagement with a receptacle bracket (652) on the pivot base (2).

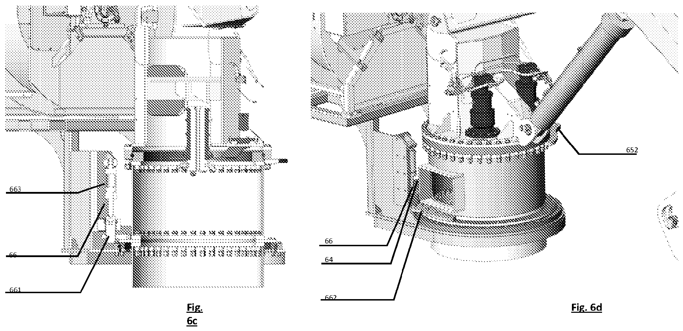

**Fig. 6c** is a vertical axial parallel cross-section and sketch of the pedestal between the same levels as in Fig. 6a. It shows a second locking device (66) relative to the pedestal (1) or as a deck that is arranged to be locked in a corresponding receptacle bracket (652) when the bracket (64) (and the fish pump (9)) is parked.
**Fig. 6d** shows an isometric view of the pedestal (1) and the pivot base (2), with locking device (66) in engagement with the second receptacle bracket (652) on the pedestal (1).

### Description of embodiments of the invention

The invention is a pedestal crane (0) combined with a fish pump (9) that can also be used as an ordinary pedestal crane when the fish pump (9) is not in use. The invention comprises in one embodiment the following features, see Fig. 1 and 2, as well as Fig. 6a, b, c, d;
- a pedestal (1) arranged for mounting on a ship and with a main bearing race (21) with vertical axis of rotation (1a) for a pivot base (2) with a crane beam (3, 4) that can comprise a main beam (3) and in an additional embodiment also a jib (4). A pivot base motor (22) is arranged to rotate the pivot base (2) about the vertical axis (1a) and may be hydraulic or electric. The pivot base is equipped with a horizontal bearing (31) for the crane beams (3,4) movement in the vertical plane. Thus, in an embodiment of the invention a horizontal axle bearing (31) for a main beam (3). The main beam (3) may additionally have a horizontal axel bearing (41) for a jib (4) holding a cable block (5), or the cable block may hang from the main beam (3). According to one embodiment, the cable block (5) may hang from an ear (51) on the crane beam (3,4), preferably the jib (4), and be releasable. In one embodiment, the cable block (5) may comprise a bending restrictor (51) for the electric winch cable (61) which is fixed watertight connected to a thereby liftable electric fish pump (6). There is a cable winch drum (62) with the electric winch cable (61) which lifts and the fish pump (9) via the cable block (5). The jib (4) may be skipped while yet retaining the invention; it is usually present on pedestal cranes of thetype shown here. The crane beam (3,4), in the shown embodiment the main beam (3) and jib (4) is usually actuated by the hydraulic cylinders (32,42).The invention is characterized in that the fish pump (9) and cable winch drum (62) may be rotated together with the crane of the pivot base motor (22) when they are connected, but are parked when they are not in use. More precisely may this be achieved by mounting the cable winch drum (62) on a drum bracket (64) on a bracket bearing race (63), in the embodiment shown further down towards the deck level on the pedestal (1) and concentric with the main bearing race (21) and arranged to, in the operative state, together with the cable block (5) and fish pump (9), to swing about the vertical rotational axis (1a) connected to the pivot base (2), and
- where the drum bracket (64) in the non-operative state is arranged to be disconnected from the pivot base (2) so that the fish pump (9), the cable block (5), and the cable winch drum (62) is parked non-rotatable,
- while the pivot base (2) of the pedestal crane (0) is still operative and rotatable on the main bearing race (21).

In parked position the fish pump (9) and drum bracket mainly end up at a height where they are arranged lower than the crane beam (3,4). The crane beam will then mainly be able to be pivot freely above these. This results in ordinary freedom of operation for the crane beam (3,4) to carry out ordinary crane operations via the crane block (71), see Fig. 2.

### The bracket for the cable winch drum

The bracket (64) comprises in one embodiment of the invention a mainly horizontally arranged, partly ring shaped base frame (641) arranged about and fastened on its bracket bearing race (63). Preferably, the bracket bearing race (63) for the bracket (64) may be arranged under the bearing race of the pivot base (21). In Fig. 6 it is shown that the bracket bearing race (63) is fastened to an inserted flange frame at a level in the pedestal (1). The rotatable, partly ring shaped base frame (641) has preferably a partial D-shape with a horizontal part for supporting up under a vertical frame (642) that extends upwards parallel to the pedestal (1) up close to the level of the bearing race (21). At the top of the vertical frame (642) there is in one embodiment a horizontal rectangular frame (643) that supports the winch drum frame (644) for the cable winch drum (62). The cable winch drum (62) is housed in a winch drum bearing (645) on the winch drum frame (644). In the operative, copivoting state, the axis of the cable winch drum will be arranged parallel with and close to the axis (31a) in the horizontal bearing (31) of the main beam (3). Thus, lifting and lowering of the crane beam will have small interruptive impact on the fed length of the winch cable (61).

The bracket according to the invention (64), comprises bracket bearing race (63) with cable winch drum (62) and cable block (5) for fish pump (9) may be original mounted with a new pedestal crane such as shown in Fig. 1, 2, and 3, or be retrofitted on an existing pedestal crane.

### The cable block

In one embodiment of the invention the combination-pedestal crane (0) of the cable block (5) comprises a bending limiter (52) for running through the winch cable (61) that gives a bending radius that is larger or equal to the smallest allowed bending radius (R0) for the winch cable (0). In one embodiment of the invention this cable block (5) is mounted on a side beam (45) with the ear (51) that holds the cable block (5) sideways displaced in relation to the crane beam (3,4), its main beam (3) and jib (4) so that its cable tracks are lying close to the vertical plane of the cable winch drum.

The cable block (5) is preferably equipped with a bow shaped row of transverse rolls or pulleys in order to reduce the friction and therefore the wear on and resistance on the winch cable.

In one embodiment one releases the cable block (5) form the crane beam (3,4) when the fish pump and cable winch drum (62) is parked. The cable block (5) is in one embodiment arranged to be released from the ear (45) of the crane beam (3,4). But in one embodiment of the invention may the cable block (5) remain connected to the crane beam (3,4) and the winch cable (61) is tilted of the cable block (5) and when the fish pump (3,4) and the cable winch drum (62) is parked, so that one can tilt on the winch cable (61) again before activating the fish pump (3,4).

### The locking device

In one embodiment of the invention the drum bracket is equipped with a releasable locking device (65) arranged to co-connect, respectively disconnect the rotation of the drum bracket (64) and the pivot base (2), see Fig. 6a and 6b. The locking device (65) is in one embodiment shown here hydraulically in the shape of a slidable locking drawback or bolt (651) vertically mounted and glibly fixed in a gliding casing on the cable winch bracket (64) and arranged to be slid up for connection with a cylindrical bore in a receptacle bracket on the flange bolts of the pivot base (2) so that the cable winch bracket (64) is forced to follow the rotation of the pivot base about the vertical axis (1a). The locking device (65) can thus lock onto or release the cable winch bracket (64) from the rotation of the pivot base (2). The locking device (65) can be equipped with hydraulic drive in the shape of a hydraulic cylinder (653). The locking bolt (651) is chamfered in order to allow a certain uncertainty in the in the azimuth of the pivot base before connection. In one embodiment of the invention there is also a second locking device (66) arranged to lock the bracket (64) from being able to rotate in relation to the pedestal (1) in order to avoid movement of the winch drum when the vessel is rolling, stamping and swinging. The second locking device (66) may comprise a locking slide/pin (661) and a reinforced casing or boring in a receptacle bracket (662) mounted on a mounted flange by the bracket bearing race (63) on the pedestal, receive the slide/pin (661). This second locking device (65) can also be equipped with hydraulic drive in the shape of a hydraulic cylinder (663).

## Claims

1. A pedestal crane (0) with an electric fish pump (9)
comprising the following features:
- a pedestal (1) arranged for mounting on a ship and equipped with a main bearing race (21) with a vertical axis of rotation (1a) for a pivot base (2) with a crane beam (3, 4) that has a cable block (5) for an electric winch cable (61) that is fixed, watertight connected to the fish pump (9);
- a cable winch drum (62) with the electric winch cable (61),
**characterized in that** the cable winch drum (62) is mounted on a drum bracket (64) on a bracket bearing race (63) on the pedestal (1) and concentric with the main bearing race (21) and is arranged to, together with the cable block (5) and fish pump (9) in operative state, to pivot around the vertical axis of rotation (1a) connected with the rotation of the pivot base (2), and
- wherein the drum bracket (64) is equipped with a releasable locking device (65) arranged to connect, respectively disconnect the drum bracket (64) in relation to the rotation of the pivot base (2),
- where the cable winch drum (62) in the non-operative state is arranged to be released from the rotation of the pivot base (2) such that
- the fish pump (9) and
- the cable winch drum (62) is parked non-rotatable,
- while the pivot base (2) of the pedestal crane (0) is arranged to remain able to pivot on the main bearing race (21).

2. Pedestal crane (0) in accordance with claim 1, wherein the crane beam (3,4) comprises a main beam (3) on a horizontal bearing (31) on the pivot base (2).

3. Pedestal crane (0) in accordance with claim 2, wherein the main beam (3) is arranged with a horizontal bearing (41) for a jib (4).

4. Pedestal crane (0) in accordance with any of the previous claims, wherein the cable block (5) has a bending limiter (51) for the electrical winch cable (61).

5. Pedestal crane (0) in accordance with any of the previous claims,
- wherein the crane beam (3,4) near its outer end is equipped with an ear (51) for the cable block (5).

6. Pedestal crane (0) in accordance with any of the previous claims,
- wherein the cable block (5) is mounted on a sideways facing side beam (45) near the outer end of the crane beam (3,4), where the side beam (45) keeps the cable block (5) sideways displaced in relation to the vertical plane of the crane beam (3,4), in order for the cable track of the cable block (5) lies close to the vertical plane of the cable winch drum (62).

7. Pedestal crane (0) in accordance with any of the previous claims,
- wherein the crane block (5) also disconnects from the crane beam (3,4) and park when the fish pump (9) and cable winch drum (62) is parked non-rotatable.

8. Pedestal crane (0) in accordance with any of the previous claims,
- wherein the drum bracket (64) is equipped with a second releasable locking device (66) arranged to prevent, preferably disconnect the rotation of the drum bracket (64) in relation to the pedestal (1) or the deck of the vessel.

9. Method for using a pedestal crane (0) with an electric fish pump (9) hanging fixed watertight connected in an electric winch cable (61) via a cable block (5), from a cable winch drum (62) that is mounted on a bracket (64) that can pivot with the pivot base (2) of the pedestal crane (0), **characterized in that** the method comprises the following steps:
- driving the pedestal crane (0) for positioning and lowering of the fish pump (9) to an operative position and pumping of fish, while the bracket (64) is locked with a releasable locking device (65) to the rotation of the pivot base (2);
- when the fish pump (9) no longer will be used ;
- winching in and lifting of the electric fish pump (9) and placement of the fish pump near the pedestal (1);
- pivoting of the pivot base (2) with the cable winch drum (62) and the fish pump (9) to a parking position near the pedestal (1),
- parking of the fish pump (9) near the pedestal (1);
- releasing of the cable block (5) from the pedestal crane (0),
- releasing of the bracket (64) from the rotation of the pivot base (2),
- use of the ship crane (0) for ordinary crane operations.

## Patentansprüche

1. Sockelkran (0) mit einer elektrischen Fischpumpe (9)
umfassend die folgenden Merkmale:
- einen zur Montage auf einem Schiff eingerichteten Sockel (1) ausgerüstet mit einem Hauptlagerlaufring (21) mit vertikaler Drehachse (1a) für einen Schwenksockel (2) mit einem Kranbalken (3, 4), der einen Kabelblock (5) für ein mit der Fischpumpe (9) fest und wasserdicht verbundenes elektrisches Windenkabel (61) aufweist;
- eine Seilwindentrommel (62) mit dem elektrischen Windenkabel (61),
**dadurch gekennzeichnet, dass** die Seilwindentrommel (62) auf einer Trommelhalterung (64) auf einem Konsolenlagerlaufring (63) am Sockel (1) und konzentrisch zum Hauptlagerlaufring (21) montiert und so eingerichtet ist,
dass sie zusammen mit dem Kabelblock (5) und der Fischpumpe (9) im operativen Zustand um die vertikale Drehachse (1a) schwenkt, die mit der Drehung des Schwenksockels (2) verbunden ist, und
- wobei die Trommelhalterung (64) mit einer lösbaren Verriegelungsvorrichtung (65) ausgestattet ist, die eingerichtet ist, um die Trommelhalterung (64) in Bezug auf die Drehung des Schwenksockels (2) zu verbinden bzw. zu trennen,
- wobei die Seilwindentrommel (62) im nichtoperativen Zustand so eingerichtet ist, dass sie von der Drehung des Schwenksockels (2) freigegeben wird, so dass
- die Fischpumpe (9) und
- die Seilwindentrommel (62) drehfest geparkt werden,
- während der Schwenksockel (2) des Sockelkrans (0) so eingerichtet ist, dass er auf dem Hauptlagerlaufring (21) drehbar bleibt.

2. Sockelkran (0) nach Anspruch 1, wobei der Kranbalken (3, 4) einen Hauptbalken (3) auf einem horizontalen Lager (31) am Schwenksockel (2) umfasst.

3. Sockelkran (0) nach Anspruch 2, wobei der Hauptbalken (3) mit einem Horizontallager (41) für einen Ausleger (4) eingerichtet ist.

4. Sockelkran (0) nach einem der vorangehenden Ansprüche, wobei der Kabelblock (5) einen Biegebegrenzer (51) für das elektrische Windenkabel (61) aufweist.

5. Sockelkran (0) nach einem der vorangehenden Ansprüche,
- wobei der Kranbalken (3, 4) in der Nähe seines äußeren Endes mit einer Öse (51) für den Kabelblock (5) ausgestattet ist.

6. Sockelkran (0) nach einem der vorangehenden Ansprüche,
- wobei der Kabelblock (5) in der Nähe des äußeren Endes des Kranbalkens (3, 4) an einem seitwärts gerichteten Seitenbalken (45) montiert ist, wobei der Seitenbalken (45) den Kabelblock (5) seitlich in Bezug auf die vertikale Ebene des Kranbalkens (3, 4) versetzt hält, damit die Kabelbahn des Kabelblocks (5) nahe an der vertikalen Ebene der Kabelwindentrommel (62) liegt.

7. Sockelkran (0) nach einem der vorangehenden Ansprüche,
- wobei der Kabelblock (5) auch vom Kranbalken (3,4) abgekoppelt und geparkt wird, wenn die Fischpumpe (9) und die Kabelwindentrommel (62) drehfest geparkt sind.

8. Sockelkran (0) nach einem der vorangehenden Ansprüche,
- wobei die Trommelhalterung (64) mit einer zweiten lösbaren Verriegelungsvorrichtung (66) ausgestattet ist, die so eingerichtet ist, dass sie die Drehung der Trommelhalterung (64) in Bezug auf den Sockel (1) oder das Deck des Schiffes verhindert, vorzugsweise entkoppelt.

9. Verfahren zur Verwendung eines Sockelkrans (0) mit einer elektrischen Fischpumpe (9), die wasserdicht an einem elektrischen Windenkabel (61) über einen Kabelblock (5) an einer Seilwindentrommel (62) hängt, die an einer Halterung (64) montiert ist, die mit dem Schwenksockel (2) des Sockelkrans (0) schwenken kann, **dadurch gekennzeichnet, dass** das Verfahren die folgenden Schritte umfasst:
- Fahren des Sockelkrans (0) zum Positionieren und Absenken der Fischpumpe (9) in eine operative Position und zum Pumpen von Fisch, während die Halterung (64) mit einer lösbaren Verriegelungsvorrichtung (65) an der Drehung des Schwenksockels (2) verriegelt ist;
- wenn die Fischpumpe (9) nicht länger verwendet wird;
- Einholen und Anheben der elektrischen Fischpumpe (9) und Platzieren der Fischpumpe in der Nähe des Sockels (1);
- Schwenken des Schwenksockels (2) mit der Seilwindentrommel (62) und der Fischpumpe (9) in eine Parkposition in der Nähe des Sockels (1),
- Parken der Fischpumpe (9) in der Nähe des Sockels (1);
- Lösen des Kabelblocks (5) vom Sockelkran (0),
- Lösen der Halterung (64) von der Drehung des Schwenksockels (2),
- Verwendung des Schiffskrans (0) für normale Kranarbeiten.

## Revendications

1. Grue à socle (0) équipée d'une pompe électrique à poissons (9), comprenant les dispositifs suivants :
- un socle (1) agencé pour être monté sur un navire et équipé d'un chemin de roulement principal (21) ayant un axe de rotation vertical (1a) pour une base pivotante (2) avec une poutre de grue (3, 4) qui présente un bloc de câble (5) pour un câble de treuil électrique (61) qui est connecté de façon fixe et étanche à la pompe de poissons (9),
- un tambour de treuil de câble (62) avec le câble de treuil électrique (61), **caractérisé en ce que** le tambour de treuil de câble (62) est monté sur un support de tambour (64) sur un chemin de roulement de support (63) sur le socle (1) et de façon concentrique avec le chemin de roulement principal (21) et est agencé pour pivoter, conjointement avec le bloc de câble (5) et la pompe à poissons (9) dans un état opérationnel, autour de l'axe vertical de rotation (1a) qui est connecté à la rotation de la base pivotante (2), et
- dans lequel le support de tambour (64) est équipé d'un dispositif de verrouillage libérable (65) agencé pour connecter le support de tambour (64) à la rotation de la base pivotante (2), et respectivement l'en déconnecter, et
- le tambour de treuil de câble (62), dans l'état non opérationnel, est agencé pour être libéré de la rotation de la base pivotante (2) de manière à stationner :
- la pompe à poissons (9) et
- le tambour de treuil de câble (62) de façon non rotative,
- tandis que la base pivotante (2) de la grue à socle (0) est agencée pour demeurer apte à pivoter sur le chemin de roulement principal (21).

2. Grue à socle (0) selon la revendication 1, dans laquelle la poutre de grue (3, 4) comprend une poutre principale (3) sur un palier horizontal (31) sur la base pivotante (2).

3. Grue à socle (0) selon la revendication 2, dans laquelle la poutre principale (3) est agencée avec un palier horizontal (41) pour une potence (4).

4. Grue à socle (0) selon l'une quelconque des revendications précédentes, dans laquelle le bloc de câble (5) comprend un limiteur de courbure (51) pour le câble de treuil électrique (61).

5. Grue à socle (0) selon l'une quelconque des revendications précédentes,
- dans laquelle la poutre de grue (3, 4) est équipée, à proximité de son extrémité extérieure, d'une oreille (51) pour le bloc de câble (5).

6. Grue à socle (0) selon l'une quelconque des revendications précédentes,
- dans laquelle le bloc de câble (5) est monté sur une poutre latérale (45) orientée latéralement à proximité de l'extrémité extérieure de la poutre de grue (3, 4), où la poutre latérale (45) maintient le bloc de câble décalé latéralement par rapport au plan vertical de la poutre de grue (3, 4) afin que le chemin du câble du bloc de câble (5) soit situé à proximité du plan vertical du tambour de treuil de câble (62).

7. Grue à socle (0) selon l'une quelconque des revendications précédentes,
- dans laquelle le bloc de câble (5) se déconnecte également de la poutre de grue (3, 4) et se stationne lorsque la pompe de poissons (9) et le tambour de treuil de câble (62) sont stationnés de façon non rotative.

8. Grue à socle (0) selon l'une quelconque des revendications précédentes,
- dans laquelle le support de tambour (64) est équipé d'un deuxième dispositif de verrouillage libérable (66) agencé pour empêcher, de préférence déconnecter la rotation du support de tambour (64) par rapport au socle (1) ou au pont du navire.

9. Procédé pour utiliser une grue à socle (0) équipée d'une pompe électrique à poissons (9) suspendue et connectée de façon fixe et étanche à l'eau dans un câble de treuil électrique (61) via un bloc de câble (5), à partir d'un tambour de treuil de câble (62) qui est monté sur un support (64) qui peut pivoter avec la base pivotante (2) de la grue à socle (0), **caractérisé en ce que** le procédé comprend les étapes suivantes :
- actionnement de la grue à socle (0) pour positionner et abaisser la pompe à poissons (9) jusqu'à une position opérationnelle et pompage des poissons, tandis que le support (64) est verrouillé sur la rotation de la base pivotante (2) avec un dispositif de verrouillage libérable (65), et
- lorsque la pompe à poissons (9) cessera d'être utilisée :
- treuillage et levage de la pompe électrique à poissons (9) et positionnement de la pompe à poissons à proximité du socle (1),
- pivotement de la base pivotante (2) avec le tambour de treuil de câble (62) et la pompe à poissons (9) jusqu'à une position de stationnement à côté du socle (1),
- stationnement de la pompe à poissons (9) à proximité du socle (1),
- libération du bloc de câble (5) de la grue à socle (0),
- libération du support (64) de la rotation de la base pivotante (2),
- utilisation de la grue de navire (0) pour des opérations de grue habituelles.
